(19) Europäisches Patentamt / European Patent Office / Office européen des brevets

(11) **EP 2 025 974 A2**

(12) **EUROPEAN PATENT APPLICATION**

(43) Date of publication:
**18.02.2009 Bulletin 2009/08**

(51) Int Cl.:
**F16H 61/21** *(2006.01)*

(21) Application number: **08160968.7**

(22) Date of filing: **23.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **01.08.2007 JP 2007200762**

(71) Applicant: Aisin AW Co., Ltd.
**Fujii-cho**
**Anjyo-shi,**
**Aichi 444-1192 (JP)**

(72) Inventors:
• **KONDOU, Yoshito**
  **Okazaki-shi Aichi 444-8564 (JP)**
• **MIYAJIMA, Takayuki**
  **Okazaki-shi Aichi 444-8564 (JP)**
• **TAKEUCHI, Atsushi**
  **Okazaki-shi Aichi 444-8564 (JP)**

(74) Representative: **Vossius & Partner**
**Siebertstrasse 4**
**81675 München (DE)**

(54) **Driving assist method for vehicle including automatic transmission, driving assist control program, and driving assist apparatus for vehicle including automatic transmission**

(57) The present invention provides a driving assist method for a vehicle including an automatic transmission, a driving assist control program, and a driving assist apparatus for a vehicle including an automatic transmission, which enable appropriate deceleration by a downshift in a vehicle including an automatic transmission. If a downshift operation is performed and the torque of an engine is increased on the basis of the downshift operation, and if it is determined that a vehicle will be accelerated before the completion of a gearshift, an electronic transmission control device calculates a deceleration for offsetting the acceleration. On the basis of the calculated deceleration, the electronic transmission control device controls a braking device via an electronic brake control device to apply braking force to the vehicle. Accordingly, it is possible to suppress the acceleration of the vehicle based on the increase in the engine torque due to the downshift operation.

FIG. 2

**Description**

The disclosure of Japanese Patent Application No. 2007-200762 filed on August 1, 2007, including the specification, drawings and abstract thereof, is incorporated herein by reference in its entirety.

The present invention relates to a driving assist method for a vehicle including an automatic transmission, a driving assist control program, and a driving assist apparatus for a vehicle including an automatic transmission.

In recent years, the transmission mode of an automatic transmission has been divided into an automatic transmission mode in which the gearshift is performed in accordance with a previously prepared gearshift map and a manual transmission mode in which the gearshift is performed through a lever operation. Generally, the manual transmission mode is turned on by the operation of a shift lever. For example, in engine braking, the gearshift of the transmission is performed through a lever operation (a downshift) to increase engine braking force.

In the manual transmission mode, if a request for the downshift is received when there is a significant difference between the engine rotation rate and the output rotation rate (the output shaft rotation rate) of the transmission, a large gearshift shock is generated in a short time.

That is, the gear ratio of the automatic transmission is increased in the downshift. Thus, the rotation rate of the engine needs to be increased. However, a throttle valve is closed to turn off the accelerator pedal (for engine braking). Therefore, the torque of the output shaft of the automatic transmission is transmitted to the engine due to torque transmission from a frictional engagement device of the automatic transmission.

As a result, inertia torque generated along with the increase in the engine rotation rate acts as braking torque for braking a vehicle. In this case, as the connection time of the frictional engagement device of the automatic transmission (the gearshift time) is reduced, the braking torque is rapidly increased to increase the gearshift shock.

In view of the above, according to Japanese Unexamined Patent Application Publication No. 10-103479, to enable a smooth gearshift without causing a large gearshift shock in a short time, the engine torque is increased in a short time to make the two rotation rates match each other.

Meanwhile, according to the above publication, if the downshift is performed on a downhill slope through the operation of the shift lever in the OFF state of the accelerator pedal for engine braking, for example, a feeling of acceleration is caused in the gearshift due to the increase in the engine torque in a short time.

In this case, the gear ratio of the automatic transmission is increased due to the downshift. Thus, an engine control device controls the engine to increase the engine rotation speed. Due to the increase in the engine rotation speed, the engine output is increased.

In the above process, if there arises a difference between the timing of increasing the engine output and the connection timing of the frictional engagement device of the automatic transmission, the engine output is transmitted to the output shaft of the automatic transmission, and the speed of the vehicle is increased. Meanwhile, in a system configuration not employ the technique of the above publication, in which the engine torque is not increased in the downshift, and in which the frictional engagement device of the automatic transmission is loosely engaged to prevent a large gearshift shock, it takes time until a feeling of deceleration is obtained. In this case, if it requires time to obtain the feeling of deceleration after the downshift, the deceleration in response to a requested operation cannot be obtained. As a result, the operability is deteriorated.

The present invention has been made to solve the above issues, and an object of the present invention is to provide a driving assist method for a vehicle including an automatic transmission, a driving assist control program, and a driving assist apparatus for a vehicle including an automatic transmission, which enable appropriate deceleration by a downshift in a vehicle including an automatic transmission.

According to a first aspect of the present invention, a driving assist method for a vehicle includes an automatic transmission for performing a gearshift to change a gear ratio of the transmission on the basis of a gearshift map and increase the gear ratio of the transmission in response to a downshift operation of a shift lever. The method includes: a step of calculating, upon the downshift operation of the shift lever, a post-gearshift engine rotation rate of an engine obtainable after the gearshift of the transmission; a step of determining whether or not to perform deceleration by a brake driving unit on the basis of a result of comparison between the post-gearshift engine rotation rate and a pre-gearshift engine rotation rate; a step of calculating a necessary deceleration upon determination of the performance of the deceleration by the brake driving unit; and a step of performing, on the basis of the calculated necessary deceleration, a brake control by the brake driving unit on the vehicle until the completion of the gearshift.

According to a second aspect of the present invention, the driving assist method for a vehicle including an automatic transmission according to the first aspect of the present invention further includes a step of increasing the torque of the engine upon the downshift operation of the shift lever.

According to a third aspect of the present invention, a driving assist control program causes a computer to perform a control of changing a gear ratio of a transmission on the basis of a gearshift map and to control the transmission to perform a gearshift to increase the gear ratio of the transmission in response to a downshift operation of a shift lever. The program causes the computer to function as: a downshift determination unit for determining the downshift operation of the shift lever; an estimated engine rotation rate calculation unit for calculating, on the basis of the downshift operation of the shift lever, a post-gearshift engine rotation rate of an engine obtainable after the gearshift of the transmission; an immediately preceding engine rotation rate detection unit for detecting a pre-gearshift engine rotation rate obtained before the gearshift; a deceleration determination unit for determining whether or not to perform deceleration by a brake driving unit on the basis of a result of comparison between the post-gearshift engine rotation rate and the pre-gearshift engine rotation rate; a deceleration calculation unit for calculating a necessary deceleration upon determination by the deceleration determination unit of the performance of the deceleration by the brake driving unit; and a brake control signal generation unit for generating, on the basis of the necessary deceleration calculated by the deceleration calculation unit, a control signal for causing a brake control to be performed on a vehicle, and outputting the signal to the brake driving unit until the completion of the gearshift.

According to a fourth aspect of the present invention, in the driving assist control program according to the third aspect of the present invention, the computer further includes a function as a torque-up signal generation unit for generating a control signal for increasing the torque of the engine upon the downshift operation of the shift lever.

According to a fifth aspect of the present invention, a driving assist apparatus for a vehicle includes an automatic transmission for performing a gearshift to change a gear ratio of the transmission on the basis of a gearshift map and increase the gear ratio of the transmission in response to a downshift operation of a shift lever. The apparatus includes: a shift lever operation position detection unit for detecting a shift position of the shift lever; a downshift determination unit for determining the downshift operation of the shift lever on the basis of a detection signal from the shift lever operation position detection unit; an estimated engine rotation rate calculation unit for calculating, upon determination by the downshift determination unit of the downshift operation, a post-gearshift engine rotation rate of an engine obtainable after the gearshift of the transmission, as an estimated engine rotation rate, on the basis of the downshift operation; an immediately preceding engine rotation rate detection unit for detecting a pre-gearshift engine rotation rate obtained before the gearshift as an immediately preceding engine rotation rate; a deceleration determination unit for determining whether or not to perform deceleration by a brake driving unit on the basis of a result of comparison between the estimated engine rotation rate and the immediately preceding engine rotation rate; a deceleration calculation unit for calculating a necessary deceleration upon determination by the deceleration determination unit of the performance of the deceleration by the brake driving unit; and a brake control signal generation unit for generating, on the basis of the necessary deceleration calculated by the deceleration calculation unit, a control signal for causing a brake control to be performed on the vehicle, and outputting the signal to the brake driving unit until the completion of the gearshift.

According to a sixth aspect of the present invention, the driving assist apparatus for a vehicle including an automatic transmission according to the fifth aspect of the present invention further includes an opening degree determination unit for determining whether or not a throttle opening degree is closed. Upon determination by the opening degree determination unit that the throttle opening degree is closed, the deceleration determination unit determines whether or not to perform the deceleration by the brake driving unit.

According to a seventh aspect of the present invention, the driving assist apparatus for a vehicle including an automatic transmission according to either one of the fifth aspect and the sixth aspect of the present invention further includes a torque-up signal generation unit for generating a control signal for increasing the torque of the engine upon determination by the downshift determination unit of the downshift operation.

According to the first aspect of the present invention, upon the downshift operation of the shift lever, whether or not to perform the deceleration by the brake driving unit can be determined on the basis of the result of the comparison between the post-gearshift engine rotation rate of the engine and the pre-gearshift engine rotation rate. Further, if the performance of the deceleration by the brake driving unit is determined, the necessary deceleration is calculated, and the brake control is performed on the vehicle by the brake driving unit on the basis of the calculated necessary deceleration. Accordingly, appropriate deceleration can be performed.

According to the second aspect of the present invention, even if the torque of the engine is increased upon the downshift operation of the shift lever, the acceleration of the vehicle can be suppressed.

According to the third aspect of the present invention, upon the downshift operation of the shift lever, whether or not to perform the deceleration by the brake driving unit is determined on the basis of the result of the comparison between the post-gearshift engine rotation rate of the engine and the pre-gearshift engine rotation rate. Further, if the performance of the deceleration by the brake driving unit is determined, the necessary deceleration is calculated. Then, on the basis of the calculated necessary deceleration, the brake control is performed on the vehicle by the brake driving unit to decelerate the vehicle. Accordingly, appropriate deceleration can be performed.

According to the fourth aspect of the present invention, even if the torque of the engine is increased upon the downshift operation of the shift lever, the acceleration of the vehicle can be suppressed.

According to the fifth aspect of the present invention, upon the downshift operation of the shift lever, whether or not to perform the deceleration by the brake driving unit is determined on the basis of the result of the comparison between the post-gearshift engine rotation rate of the engine and the pre-gearshift engine rotation rate. Further, if the performance of the deceleration by the brake driving unit is determined, the necessary deceleration is calculated. Then, on the basis of the calculated necessary deceleration, the brake control is performed on the vehicle by the brake driving unit to decelerate the vehicle. Accordingly, appropriate deceleration can be performed.

According to the sixth aspect of the present invention, when the downshift operation of the shift lever has been performed and the accelerator pedal has not been pressed down, the brake driving unit is controlled for deceleration. Accordingly, a brake control according to the intention of a driver is performed.

According to the seventh aspect of the present invention, even if the torque of the engine is increased upon the downshift operation of the shift lever, appropriate control of the deceleration can be performed.

The invention is further described with reference to the drawings:

Fig. 1 is a system configuration diagram for explaining a drive system and a brake system of a vehicle according to an embodiment of the present invention;

Fig. 2 is a block diagram for explaining a configuration of a driving assist apparatus according to the embodiment of the present invention;

Fig. 3 is an explanatory diagram for explaining a data configuration of a torque map for obtaining an engine torque;

Fig. 4 is an explanatory diagram for explaining a data configuration of a torque transmission ratio map for obtaining a torque transmission ratio of a torque converter;

Fig. 5 is an explanatory diagram for explaining a data configuration of a rotational difference map for obtaining a rotational difference of an engine rotation rate for an input shaft rotation rate; and

Fig. 6 is a flowchart for explaining an assist operation in a downshift of the driving assist apparatus.

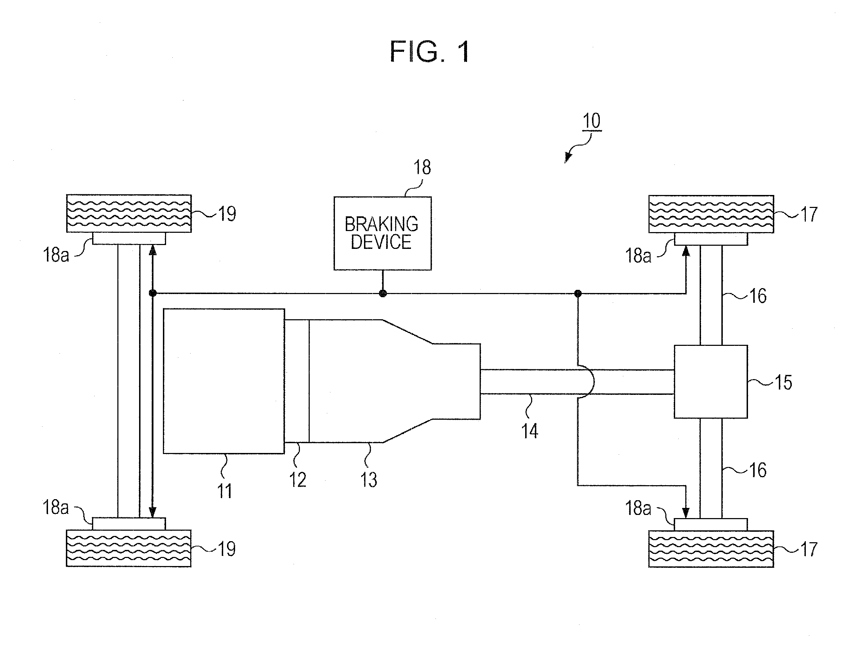

With reference to Figs. 1 to 6, description will be made below of an embodiment embodying a driving assist apparatus for a vehicle including an automatic transmission according to the present invention. Fig. 1 shows a system configuration diagram for explaining a configuration of a drive system and a brake system of a vehicle 10. In Fig. 1, an engine 11 is connected to an automatic transmission 13 via a torque converter 12. Specifically, a crankshaft of the engine 11 is connected to an input shaft of the automatic transmission 13 via the torque converter 12 (a pump impeller and a turbine runner). An output shaft of the automatic transmission 13 is connected to a final reduction device 15 via a propeller shaft 14.

The final reduction device 15, which includes reduction gears and a differential device, reduces the drive force transmitted from the propeller shaft 14 and increases the torque to distribute the drive force to two drive shafts 16 each extending in a direction perpendicular to the direction of the propeller shaft 14. The two drive shafts 16 rotate respective drive tires 17 with the drive force distributed by the final reduction device 15.

A braking device 18 functioning as a brake driving unit includes brake drums 18a provided to the drive tires 17 and driven tires 19 of the vehicle 10. The braking device 18 constitutes a device for braking the vehicle 10 by supplying and exhausting hydraulic pressure to and from wheel cylinders provided to the brake drums 18a.

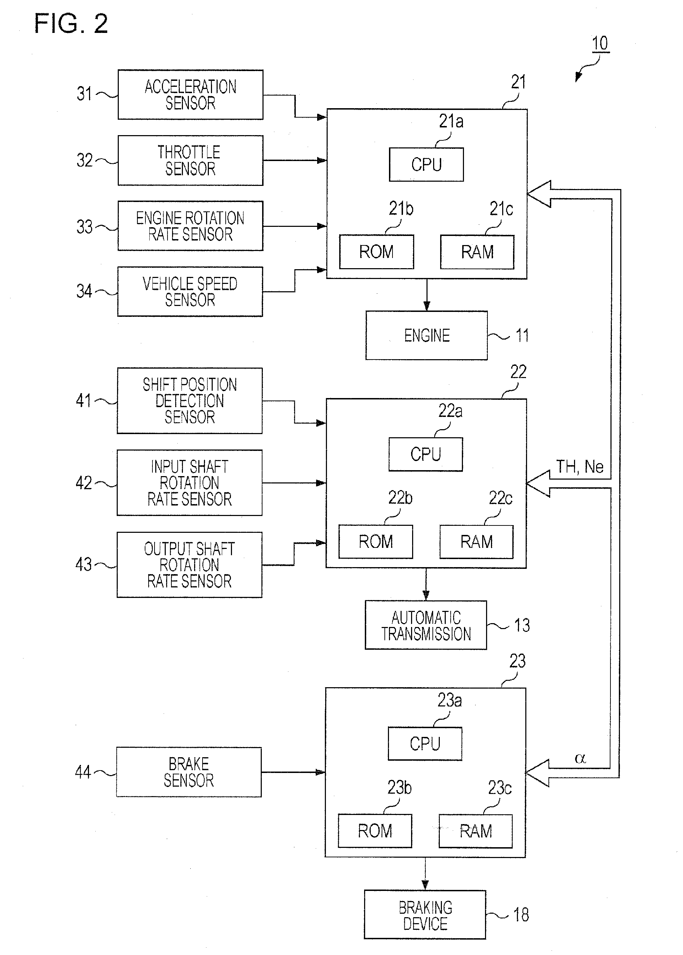

Fig. 2 shows a circuit block diagram for explaining an electrical configuration of the driving assist apparatus for a vehicle. As illustrated in Fig. 2, the vehicle 10 includes an electronic engine control device 21 for performing an overall control of the engine 11, an electronic transmission control device 22 for performing an overall control of the automatic transmission 13, and an electronic brake control device 23 for performing an overall control of the braking device 18. The electronic engine control device 21, the electronic transmission control device 22, and the electronic brake control device 23 are configured to exchange data with one another.

Further, the vehicle 10 includes an acceleration sensor 31 for detecting the amount of pressing of an accelerator pedal, a throttle sensor 32 for detecting a throttle opening degree TH of a throttle valve, an engine rotation rate sensor 33 for detecting a rotation rate Ne of the engine 11, and a vehicle speed sensor 34 for detecting the vehicle speed. The vehicle 10 further includes a shift position detection sensor 41 for detecting an operation position of a shift lever, an input shaft rotation rate sensor 42 for detecting a rotation rate Nin of the input shaft of the automatic transmission 13, an output shaft rotation rate sensor 43 for detecting a rotation rate Nout of the output shaft of the automatic transmission 13, and a brake sensor 44 for detecting the amount of pressing of a brake pedal.

The electronic engine control device 21 is constituted by a computer including a CPU (Central Processing Unit) 21a, storage devices such as a ROM (Read-Only Memory) 21b and a RAM (Random Access Memory) 21c, and an input-output interface. The electronic engine control device 21 (The CPU 21a) receives input of a variety of detection signals from the acceleration sensor 31, the throttle sensor 32, the engine rotation rate sensor 33, the vehicle speed sensor 34, and so forth.

In accordance with a control program stored in the ROM 21b, and on the basis of the detection signals from the respective sensors 31 to 34, the CPU 21a calculates the amount of pressing of the accelerator pedal, the throttle opening degree TH, the engine rotation rate Ne, and the vehicle speed at a given time, and stores the calculated data in the RAM 21c. Then, on the basis of the respective calculated data sets obtained from the calculation based on the respective detection signals, the CPU 21a performs signal processing in accordance with the control program stored in the ROM 21b, to thereby perform a fuel injection amount control, an ignition timing control, a throttle control, and a variety of other engine controls.

Further, the electronic engine control device 21 (the CPU 21a) is configured to output to the electronic transmission control device 22 and the electronic brake control device 23 the respective calculated data sets at the given time obtained from the calculation based on the respective detection signals.

Further, upon input of a manual downshift transmission mode signal from the electronic transmission control device 22, the electronic engine control device 21 (the CPU 21a) shifts to a control mode according to the manual downshift transmission mode signal, and performs a control to increase the engine rotation rate Ne. That is, the electronic engine control device 21 (the CPU 21a) controls the engine 11 to increase the engine rotation rate Ne to mitigate a gearshift shock attributed to an increase in a gear ratio M of the automatic transmission 13 due to a downshift operation of the shift lever.

The electronic transmission control device 22 functions as a downshift determination unit, a brake control signal generation unit, a torque-up signal generation unit, a shift lever operation position detection unit, a deceleration determination unit, a deceleration calculation unit, an estimated engine rotation rate calculation unit, and an immediately preceding engine rotation rate detection unit. The electronic transmission control device 22 is constituted by a computer including a CPU 22a, storage devices such as a ROM 22b and a RAM 22c, and an input-output interface. The electronic transmission control device 22 (The CPU 22a) receives input of a variety of detection signals from the shift position detection sensor 41, the input shaft rotation rate sensor 42, the output shaft rotation rate sensor 43, and so forth.

In accordance with a control program stored in the ROM 22b, and on the basis of the detection signals from the respective sensors 41 to 43, the CPU 22a calculates the shift position of the shift lever, the input shaft rotation rate Nin of the automatic transmission 13, and the output shaft rotation rate Nout of the automatic transmission 13 at a given time, and stores the calculated data in the RAM 22c.

Further, the CPU 22a is configured to cause the respective calculated data sets at the given time obtained from the calculation by the electronic engine control device 21 (the CPU 21a) to be input from the electronic engine control device 21 and stored in the RAM 22c.

On the basis of the calculated data stored in the RAM 22c, the CPU 22a performs signal processing in accordance with the control program stored in the ROM 22b. Thereby, the CPU 22a performs a drive control of a frictional connection device (not illustrated) included in the automatic transmission 13, and performs a variety of controls to change the gear ratio M of the automatic transmission 13. For example, the CPU 22a sets the gear ratio M in accordance with a gearshift map (not illustrated) stored in the ROM 22b and representing the gear ratio M determined by the known amount of pressing of the accelerator pedal and the vehicle speed. Then, the CPU 22a performs the drive control of the frictional connection device and changes the gear ratio M of the automatic transmission 13 to obtain the set gear ratio M.

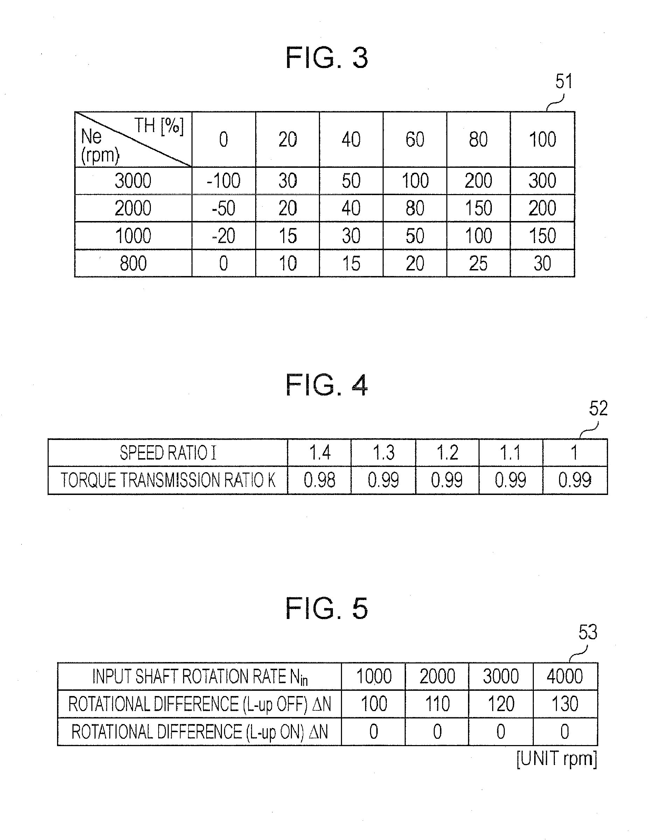

The ROM 22b stores a torque map 51 for obtaining an engine torque Te of the engine 11. As illustrated in Fig. 3, the torque map 51 stores the data of the engine torque Te obtained from parameters of the throttle opening degree TH and the engine rotation rate Ne. The data has been previously obtained from a test, an experiment, and so forth and stored.

Further, the ROM 22b stores a torque transmission ratio map 52 for obtaining a torque transmission ratio K of the torque converter 12. As illustrated in Fig. 4, the torque transmission ratio map 52 stores the data of the torque transmission ratio K for a speed ratio I (i.e., the quotient obtained by dividing the input shaft rotation rate Nin of the automatic transmission 13 by the engine rotation rate Ne). The data has been previously obtained from a test, an experiment, and so forth and stored.

Further, the ROM 22b stores a rotational difference map 53 for obtaining the rotational difference of the engine rotation rate Ne from the input shaft rotation rate Nin of the automatic transmission 13. The torque converter 12 is provided between the engine 11 and the automatic transmission 13. Therefore, the engine rotation rate Ne and the input shaft rotation rate Nin of the automatic transmission 13 do not match each other unless in the ON state of a lockup clutch of the torque converter 12.

As illustrated in Fig. 5, the rotational difference map 53 stores the data of a rotational difference ΔN of the engine rotation rate Ne for the input shaft rotation rate Nin. The data has been previously obtained from a test, an experiment, and so forth and stored. Through the addition of the data of the rotational difference ΔN to the input shaft rotation rate Nin, therefore, the engine rotation rate Ne at a given time (an estimated engine rotation rate) can be known.

If the electronic transmission control device 22 (the CPU 22a) determines on the basis of the detection signal from the shift position detection sensor 41 that the downshift operation of the shift lever has been performed, the electronic transmission control device 22 shifts from a normal automatic transmission mode to a manual downshift transmission mode. Upon the shift to the manual downshift transmission mode, the CPU 22a generates a drive signal for increasing the gear ratio M of the automatic transmission 13 in accordance with the not-illustrated gearshift map, and outputs the signal to the frictional connection device. In this process, upon the shift to the manual downshift transmission mode, the CPU 22a generates the manual downshift transmission mode signal for notifying of the ON state of the manual downshift transmission mode, and outputs the signal to the electronic engine control device 21 and the electronic brake control device 23.

Further, in increasing the gear ratio M of the automatic transmission 13, the CPU 22a generates a control signal for increasing the engine torque in a short time to enable a smooth gearshift without causing a large gearshift shock in a short time, and outputs the signal to the electronic engine control device 21. Then, in the manual downshift transmission mode, if the frictional connection device operates for connection in response to the drive signal, and then if the gear ratio M of the automatic transmission 13 is increased, the CPU 22a shifts from the manual downshift transmission mode to the normal automatic transmission mode. Upon the shift from the manual downshift transmission mode to the automatic transmission mode, the CPU 22a generates an automatic transmission mode signal for notifying of the ON state of the automatic transmission mode, and outputs the signal to the electronic engine control device 21 and the electronic brake control device 23.

Further, in the manual downshift transmission mode, on the basis a driving assist control program stored in the ROM 22b, the CPU 22a performs a gearshift shock mitigation process to improve the feeling of a driver in the gearshift. The driving assist control program refers to a program for causing the vehicle 10 to smoothly move without generating a feeling of acceleration in the gearshift to the requested gear ratio M on the basis of the gear ratio M requested by the downshift, the gear ratio M prior to the downshift, and the vehicle speed.

That is, in the gearshift to the requested gear ratio M, the gear ratio M of the automatic transmission 13 is increased due to the downshift, and the electronic engine control device 21 controls the engine 11 to increase the engine rotation rate Ne. As the engine rotation rate Ne is increased, the engine output is increased. If there arises a difference between the timing of increasing the engine output and the connection timing of the frictional connection device of the automatic transmission 13, the engine output is transmitted to the output shaft of the automatic transmission 13, and the vehicle 10 is accelerated. The driving assist control is performed to estimate and eliminate the acceleration.

In the driving assist control process, whether or not the vehicle 10 will be accelerated is determined. Then, if it is determined that the vehicle 10 will be accelerated, a deceleration $\alpha$ for preventing the acceleration is calculated. The calculated deceleration $\alpha$ is output to the electronic brake control device 23. Then, braking force based on the deceleration $\alpha$ is applied to the vehicle 10 via the electronic brake control device 23 to diminish the acceleration.

The electronic brake control device 23 is constituted by a computer including a CPU 23a, storage devices such as a ROM 23b and a RAM 23c, and an input-output interface. The electronic brake control device 23 receives input of a detection signal from the brake sensor 44. Upon input of the detection signal from the brake sensor 44, the CPU 23a calculates the amount of pressing of the brake pedal at a given time in accordance with a control program stored in the ROM 23b, and stores the calculated data in the RAM 23c.

Further, the CPU 23a is configured to cause the respective calculated data sets at a given time obtained from the calculation by the electronic engine control device 21 (the CPU 21a) to be input from the electronic engine control device 21 and updated and stored in the RAM 23c. Further, the CPU 23a is configured to cause the respective calculated data sets at a given time obtained from the calculation by the electronic transmission control device 22 (the CPU 22a) to be input from the electronic transmission control device 22 and updated and stored in the RAM 23c.

On the basis of the calculated data stored in the RAM 23c, the CPU 23a performs signal processing in accordance with the control program stored in the ROM 23b. Thereby, the CPU 23a performs a drive control of the braking device 18 for a control to brake the vehicle 10.

Further, upon input of the manual downshift transmission mode signal from the electronic transmission control device 22 and a data signal representing the deceleration $\alpha$, the electronic brake control device 23 shifts to a control mode according to the manual downshift transmission mode signal, and performs a brake control based on the deceleration $\alpha$.

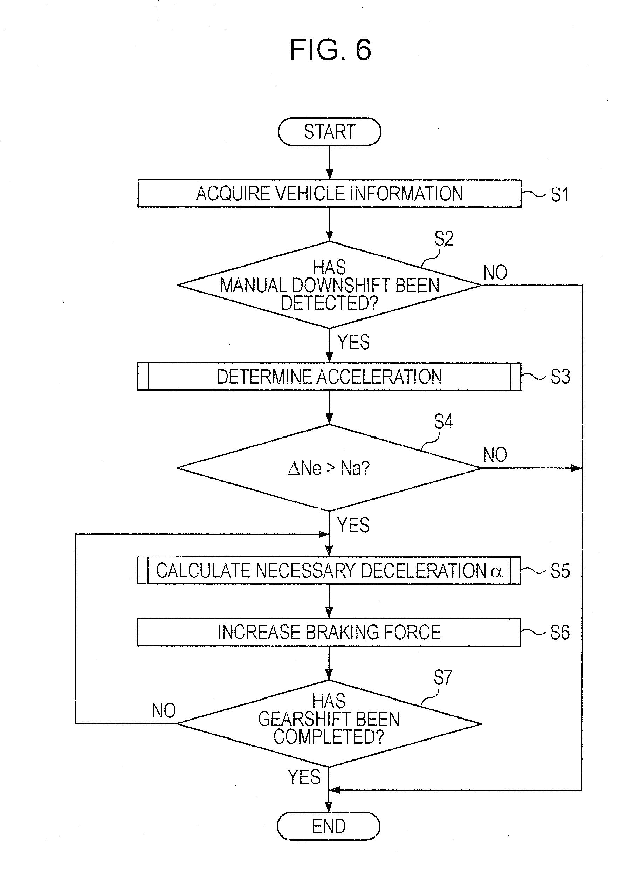

Description will now be made of the driving assist control process by the driving assist apparatus according to the present embodiment in accordance with a flowchart of Fig. 6 illustrating a procedure of processing by the electronic transmission control device 22. It is now assumed that the vehicle 10 is traveling on a road in accordance with a driving operation by the driver. In this state, the respective sensors 31 to 34 and 41 to 44 output the respective detection signals to the corresponding electronic control devices 21, 22, and 23 at a given time.

Then, on the basis of the variety of detection signals from the shift position detection sensor 41, the input shaft rotation rate sensor 42, and the output shaft rotation rate sensor 43, the electronic transmission control device 22 (the CPU 22a) calculates vehicle information such as the shift position of the shift lever, the input shaft rotation rate Nin of the automatic transmission 13, and the output shaft rotation rate Nout of the automatic transmission 13 at the given time, and stores the calculated vehicle information in the RAM 22c (Step S1). Further, the CPU 22a acquires from the electronic engine control device 21 vehicle information such as the amount of pressing of the accelerator pedal, the throttle opening degree TH, the engine rotation rate Ne, and the vehicle speed at the given time calculated by the electronic engine control device 21, and stores the acquired vehicle information in the RAM 22c. Further, the CPU 22a acquires from the electronic brake control device 23 vehicle information including the amount of pressing of the brake pedal at the given time calculated by the electronic brake control device 23, and stores the acquired vehicle information in the RAM 22c.

Subsequently, on the basis of the detection signal from the shift position detection sensor 41, the CPU 22a determines whether or not the downshift operation of the shift lever has been performed (Step S2). If the CPU 22a determines that the downshift operation has been performed (YES at Step S2), the CPU 22a shifts from the automatic transmission mode to the manual downshift transmission mode, and the procedure proceeds to Step S3.

Meanwhile, if the CPU 22a determines that the downshift operation has not been performed (NO at Step S2), the CPU 22a completes the procedure while maintaining the automatic transmission mode without shifting to the manual downshift transmission mode, and returns to wait for the downshift operation.

At Step S3, the CPU 22a outputs the manual downshift transmission mode signal to the electronic engine control device 21 and the electronic brake control device 23. Thereafter, the CPU 22a determines whether or not the vehicle 10 will be accelerated before the completion of the gearshift, i.e., whether or not to perform the deceleration by the braking device 18 (Step S3).

In response to the manual downshift transmission mode signal, the electronic engine control device 21 performs the control to increase the engine rotation rate Ne of the engine 11 to mitigate the deceleration shock.

Meanwhile, the CPU 22a reads from the RAM 22c an engine rotation rate $Ne_1$ obtained immediately before the gearshift. Further, the CPU 22a obtains the engine rotation rate Ne obtainable immediately after the gearshift (referred to as the estimated engine rotation rate $Ne_2$).

To obtain the estimated engine rotation rate $Ne_2$ obtainable immediately after the gearshift, the input shaft rotation rate Nin of the automatic transmission 13 obtainable immediately after the gearshift (referred to as the estimated input shaft rotation rate $Nin_2$) is first calculated. The estimated input shaft rotation rate $Nin_2$ is calculated from the following equation (1):

$$Nin_2 = (Nin_1 \times Ma) / Mb \tag{1}$$

Herein, $Nin_1$, Ma, and Mb represent the current input shaft rotation rate Nin obtained immediately before the gearshift, the gear ratio M obtainable immediately after the gearshift, and the gear ratio M obtained immediately before the gearshift, respectively.

For the calculation, the CPU 22a reads from the RAM 22c the current input shaft rotation rate $Nin_1$ obtained immediately before the gearshift. Further, the CPU 22a obtains the gear ratio Ma immediately after the gearshift and the gear ratio Mb immediately before the gearshift on the basis of the gear ratio Ma after the gearshift and the gear ratio Mb before the gearshift temporarily stored in the RAM 22c.

After the estimated input shaft rotation rate $Nin_2$ has been calculated, the CPU 22a obtains the estimated engine rotation rate $Ne_2$ for the estimated input shaft rotation rate $Nin_2$ with reference to the rotational difference map 53 illustrated in Fig. 5. After the engine rotation rate $Ne_1$ immediately before the gearshift and the estimated engine rotation rate $Ne_2$ immediately after the gearshift have been obtained, the CPU 22a calculates the difference ∆Ne between the estimated engine rotation rate $Ne_2$ and the engine rotation rate $Ne_1$ immediately before the gearshift (i.e., $Ne_2-Ne_1$).

Subsequently, the CPU 22a compares the calculated difference ∆Ne ($Ne_2-Ne_1$) with a reference value Na (Step S4). The reference value Na represents a maximum allowable difference in the engine rotation rate for enabling a smooth downshift to the requested gear ratio Ma without causing the feeling of acceleration. In the present embodiment, the reference value Na is a value previously obtained from a test, an experiment, and so forth and previously stored in the ROM 22b.

If the CPU 22a determines that the difference ∆Ne is greater than the reference value Na (YES at Step S4), the CPU 22a first calculates a necessary deceleration $\alpha$ on the assumption that the gearshift will be performed during the acceleration of the vehicle 10 (Step S5). That is, the CPU 22a calculates the deceleration $\alpha$ of the vehicle 10 for enabling the smooth gearshift without causing the feeling of acceleration.

The deceleration $\alpha$ of the vehicle 10 is calculated from the following equation (2), wherein Tt represents acceleration and deceleration torque generated on an axle by the automatic transmission 13:

$$\alpha = (Tt/R) / W \tag{2}$$

Herein, R and W represent the tire radius and the weight of the vehicle 10, respectively.

The tire radius R and the weight W of the vehicle 10 are previously known values. Thus, if the acceleration and deceleration torque Tt is obtained, the deceleration $\alpha$ of the vehicle 10 is obtained. The acceleration and deceleration torque Tt is calculated from the following equation (3):

$$Tt = Te \times K \times M \times J \tag{3}$$

Herein, Te, K, M, and J represent the engine torque, the torque transmission ratio of the torque converter 12, the gear ratio of the automatic transmission 13, and the differential ratio (the reduction ratio) of the final reduction device 15, respectively. Herein, the gear ratio M and the differential ratio J are previously known values. Thus, if the engine torque Te and the torque transmission ratio K of the torque converter 12 are obtained, the acceleration and deceleration torque Tt on the axle is obtained.

The engine torque Te can be obtained with reference to the torque map 51 of Fig. 3 stored in the ROM 22b. The CPU 22a reads from the RAM 22c the estimated engine rotation rate $Ne_2$ obtained at Step S3. Then, the CPU 22a reads from the RAM 22c the throttle opening degree TH obtained at Step S1.

Then, with reference to the torque map 51 stored in the ROM 22b, the CPU 22a obtains the estimated engine torque Te for the estimated input shaft rotation rate $Nin_2$ and the throttle opening degree TH. Meanwhile, the torque transmission ratio K of the torque converter 12 can be obtained with reference to the torque transmission ratio map 52 of Fig. 4 stored in the ROM 22b.

The CPU 22a first reads from the RAM 22c the estimated engine rotation rate $Ne_2$ and the estimated input shaft rotation rate $Nin_2$ obtained at Step S3, and then calculates the speed ratio I from the calculation of the following equation (4):

$$\text{Speed ratio } I = \text{Estimated input shaft rotation rate}$$

$$Nin_2/\text{Estimated engine rotation rate } Ne_2 \tag{4}$$

After the speed ratio I has been calculated, the CPU 22a obtains the torque transmission ratio K of the torque converter 12 for the speed ratio I with reference to the torque transmission ratio map 52 stored in the ROM 22b.

Then, after the estimated engine torque Te and the torque transmission ratio K have been obtained, the CPU 22a calculates the acceleration and deceleration torque Tt (i.e., $Te \times K \times M \times J$) generated on the axle by the automatic transmission 13. After the acceleration and deceleration torque Tt has been calculated, the CPU 22a calculates the deceleration $\alpha$ (i.e., (Tt/R)/W) of the vehicle 10.

If the difference $\Delta Ne$ is equal to or less than the reference value Na (NO at Step S4), the procedure is completed without the calculation of the deceleration $\alpha$ of the vehicle 10. After the deceleration $\alpha$ of the vehicle 10 (i.e., (Tt/R)/W) has been calculated, the CPU 22a calculates the braking force on the basis of the deceleration $\alpha$, and applies the braking force to the vehicle 10 via the electronic brake control device 23 until the completion of the gearshift (Step S6). Accordingly, the gearshift to the requested gear ratio Ma is smoothly completed without causing the feeling of acceleration.

Then, upon completion of the gearshift (YES at Step S7), the CPU 22a completes the driving assist control process and waits for a new downshift operation.

Effects of the present embodiment configured as described above will be described below.

(1) In the present embodiment, when the downshift operation is performed and the torque of the engine 11 is increased on the basis of the downshift operation, the electronic transmission control device 22 determines whether or not the vehicle 10 will be accelerated before the completion of the gearshift. Further, if the electronic transmission control device 22 determines that the vehicle 10 will be accelerated, the electronic transmission control device 22 calculates the deceleration $\alpha$ for offsetting the acceleration, and controls the braking device 18 via the electronic brake control device 23 on the basis of the calculated deceleration $\alpha$, to thereby apply the braking force to the vehicle 10.

Accordingly, it is possible to suppress the acceleration of the vehicle 10 based on the increase in the engine torque due to the downshift operation.

(2) In the present embodiment, the braking device 18 is controlled to offset the acceleration of the vehicle 10 by braking. Accordingly, it is possible to suppress the acceleration more reliably, easily, and accurately than in a configuration in which the connection timing of the frictional connection device of the automatic transmission 13 is controlled to suppress the acceleration or the timing of increasing the torque of the engine 11 is controlled.

The above-described embodiment may be modified as follows. In the above-described embodiment, upon the downshift operation of the shift lever, the engine rotation rate is increased to increase the torque of the engine 11. Alternatively, the present invention may be applied to a system which does not increase the torque upon the downshift.

In the above-described embodiment, upon the downshift operation of the shift lever, the automatic transmission mode shifts to the manual downshift transmission mode and whether or not the vehicle 10 will be accelerated is determined at Step S2. Alternatively, the embodiment may be modified such that the automatic transmission mode shifts to the manual downshift transmission mode and whether or not the vehicle 10 will be accelerated is determined if the downshift operation of the shift lever has been performed, and if the accelerator pedal has not been pressed down. In this case, a brake control according to the intention of the driver is performed.

**Claims**

1. A driving assist method for a vehicle including an automatic transmission for performing a gearshift to change a gear ratio of the transmission on the basis of a gearshift map and increase the gear ratio of the transmission in response to a downshift operation of a shift lever, the method comprising:

    a step of calculating, upon the downshift operation of the shift lever, a post-gearshift engine rotation rate of an engine obtainable after the gearshift of the transmission;
    a step of determining whether or not to perform deceleration by a brake driving unit on the basis of a result of comparison between the post-gearshift engine rotation rate and a pre-gearshift engine rotation rate;
    a step of calculating a necessary deceleration upon determination of the performance of the deceleration by the brake driving unit; and
    a step of performing, on the basis of the calculated necessary deceleration, a brake control by the brake driving unit on the vehicle until the completion of the gearshift.

2. The driving assist method for a vehicle including an automatic transmission according to Claim 1, further comprising:

    a step of increasing a torque of the engine upon the downshift operation of the shift lever.

3. A driving assist control program for causing a computer to perform a control of changing a gear ratio of a transmission on the basis of a gearshift map and to control the transmission to perform a gearshift to increase the gear ratio of the transmission in response to a downshift operation of a shift lever, the program causing the computer to function as:

    a downshift determination unit for determining the downshift operation of the shift lever;
    an estimated engine rotation rate calculation unit for calculating, on the basis of the downshift operation of the shift lever, a post-gearshift engine rotation rate of an engine obtainable after the gearshift of the transmission;
    an immediately preceding engine rotation rate detection unit for detecting a pre-gearshift engine rotation rate obtained before the gearshift of the transmission;
    a deceleration determination unit for determining whether or not to perform deceleration by a brake driving unit on the basis of a result of comparison between the post-gearshift engine rotation rate and the pre-gearshift engine rotation rate;
    a deceleration calculation unit for calculating a necessary deceleration upon determination by the deceleration determination unit of the performance of the deceleration by the brake driving unit; and
    a brake control signal generation unit for generating, on the basis of the necessary deceleration calculated by the deceleration calculation unit, a control signal for causing a brake control to be performed on a vehicle, and outputting the signal to the brake driving unit until the completion of the gearshift.

4. The driving assist control program according to Claim 3,
   wherein the computer further includes a function as a torque-up signal generation unit for generating a control signal for increasing a torque of the engine upon the downshift operation of the shift lever.

5. A driving assist apparatus for a vehicle including an automatic transmission for performing a gearshift to change a gear ratio of the transmission on the basis of a gearshift map and increase the gear ratio of the transmission in response to a downshift operation of a shift lever, the apparatus comprising:

    a shift lever operation position detection unit for detecting a shift position of the shift lever;
    a downshift determination unit for determining the downshift operation of the shift lever on the basis of a detection signal from the shift lever operation position detection unit;
    an estimated engine rotation rate calculation unit for calculating, upon determination by the downshift determination unit of the downshift operation, a post-gearshift engine rotation rate of an engine obtainable after the gearshift of the transmission, as an estimated engine rotation rate, on the basis of the downshift operation;
    an immediately preceding engine rotation rate detection unit for detecting a pre-gearshift engine rotation rate obtained before the gearshift as an immediately preceding engine rotation rate;

a deceleration determination unit for determining whether or not to perform deceleration by a brake driving unit on the basis of a result of comparison between the estimated engine rotation rate and the immediately preceding engine rotation rate;

a deceleration calculation unit for calculating a necessary deceleration upon determination by the deceleration determination unit of the performance of the deceleration by the brake driving unit; and

a brake control signal generation unit for generating, on the basis of the necessary deceleration calculated by the deceleration calculation unit, a control signal for causing a brake control to be performed on a vehicle, and outputting the signal to the brake driving unit until the completion of the gearshift.

6. The driving assist apparatus for a vehicle including an automatic transmission according to Claim 5, further comprising:

an opening degree determination unit for determining whether or not a throttle opening degree is closed,

wherein, upon determination by the opening degree determination unit that the throttle opening degree is closed, the deceleration determination unit determines whether or not to perform the deceleration by the brake driving unit.

7. The driving assist apparatus for a vehicle including an automatic transmission according to either one of Claims 5 and 6, further comprising:

a torque-up signal generation unit for generating, upon determination by the downshift determination unit of the downshift operation, a control signal for increasing a torque of the engine.

FIG. 1

# FIG. 2

# FIG. 3

51

| Ne<br>(rpm) \ TH [%] | 0 | 20 | 40 | 60 | 80 | 100 |
|---|---|---|---|---|---|---|
| 3000 | -100 | 30 | 50 | 100 | 200 | 300 |
| 2000 | -50 | 20 | 40 | 80 | 150 | 200 |
| 1000 | -20 | 15 | 30 | 50 | 100 | 150 |
| 800 | 0 | 10 | 15 | 20 | 25 | 30 |

# FIG. 4

52

| SPEED RATIO I | 1.4 | 1.3 | 1.2 | 1.1 | 1 |
|---|---|---|---|---|---|
| TORQUE TRANSMISSION RATIO K | 0.98 | 0.99 | 0.99 | 0.99 | 0.99 |

# FIG. 5

53

| INPUT SHAFT ROTATION RATE $N_{in}$ | 1000 | 2000 | 3000 | 4000 |
|---|---|---|---|---|
| ROTATIONAL DIFFERENCE (L-up OFF) ΔN | 100 | 110 | 120 | 130 |
| ROTATIONAL DIFFERENCE (L-up ON) ΔN | 0 | 0 | 0 | 0 |

[UNIT rpm]

# FIG. 6

```
                    ┌─────────────┐
                    │    START    │
                    └──────┬──────┘
                           │
           ┌───────────────▼───────────────┐
           │   ACQUIRE VEHICLE INFORMATION  │──── S1
           └───────────────┬───────────────┘
                           │
                    ╱──────▼──────╲
                  ╱       HAS       ╲   S2      NO
                 ◄  MANUAL DOWNSHIFT BEEN ►──────────┐
                  ╲    DETECTED?    ╱                │
                    ╲──────┬──────╱                  │
                        YES │                        │
           ┌───────────────▼───────────────┐        │
           │      DETERMINE ACCELERATION    │──── S3  │
           └───────────────┬───────────────┘        │
                           │                         │
                    ╱──────▼──────╲   S4             │
                  ╱                 ╲       NO        │
                 ◄      ΔNe > Na?     ►───────────────┤
                  ╲                 ╱                 │
                    ╲──────┬──────╱                   │
                        YES │                         │
           ┌───────────────▼───────────────┐         │
      ┌───►│ CALCULATE NECESSARY DECELERATION α │──S5 │
      │    └───────────────┬───────────────┘         │
      │                    │                         │
      │    ┌───────────────▼───────────────┐         │
      │    │     INCREASE BRAKING FORCE     │──── S6  │
      │    └───────────────┬───────────────┘         │
      │                    │                         │
      │             ╱──────▼──────╲   S7              │
      │    NO     ╱       HAS       ╲                 │
      └──────────◄   GEARSHIFT BEEN  ►               │
                  ╲   COMPLETED?    ╱                 │
                    ╲──────┬──────╱                   │
                        YES │                         │
                    ┌───────▼───────┐                 │
                    │      END      │◄────────────────┘
                    └───────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007200762 A
- JP 10103479 A